# EUROPÄISCHE PATENTSCHRIFT

(11) **EP 1 385 800 B1**
(45) Veröffentlichungstag und Bekanntmachung des Hinweises auf die Patenterteilung: **28.09.2005**
(21) Anmeldenummer: 02740321.1
(22) Anmeldetag: 03.05.2002
(51) Int. Cl.: C04B 16/00

(54) **VERWENDUNG EINER ZUSAMMENSETZUNG ALS ENTLÜFTER FÜR HYDRAULISCH ABBINDENDE MASSEN**
USE OF A COMPOSITION AS DEAERATOR FOR HYDRAULICALLY SETTING MATERIALS
UTILISATION D'UNE COMPOSITION COMME DEAERATEUR DE MASSES A PRISE HYDRAULIQUE

(30) Priorität: 04.05.2001 DE 10122207; 30.06.2001 DE 10132745
(43) Veröffentlichungstag der Anmeldung: 04.02.2004
(73) Patentinhaber: Mig Material Innovative Gesellschaft MBH, 33154 Salzkotten (DE)
(72) Erfinder: BONDER, Wolfgang, 33154 Salzkotten (DE)
(74) Vertreter: Voigt, Wolf-Rüdiger
(86) Internationale Anmeldenummer: PCT/DE2002/001654
(87) Internationale Veröffentlichungsnummer: WO 2002/090285

(56) Entgegenhaltungen:
- EP-A- 0 341 791
- CH-A- 457 245
- DE-A- 3 039 393
- DE-A- 4 421 270
- DE-C- 4 227 417
- DE-C- 19 532 426
- US-A- 3 468 684
- CHEMICAL ABSTRACTS, vol. 112, no. 20, 14. Mai 1990 (1990-05-14) Columbus, Ohio, US; abstract no. 184859, Seite 352; XP000151662 & CS 254 423 A (K. SESTAUER, ET AL.) 1. November 1989 (1989-11-01)
- CHEMICAL ABSTRACTS, vol. 115, no. 6, 12. August 1991 (1991-08-12) Columbus, Ohio, US; abstract no. 55741r, Seite 385; XP000251288 & JP 03 008749 A (Y. TOGASHI, ET AL.) 16. Januar 1991 (1991-01-16)

## Beschreibung

Die Erfindung betrifft einen die Verwendung einer Zusammensetzung als Entlüfter für hydraulisch abbindende Massen auf der Basis von organischen Verbindungen, die untereinander mischbar und homogen in Beton- und Mörtelzusatzmitteln [BZM/MZM] als stabile Komponenten einarbeitbar sind, bestehend aus Fettalkohol, Tensid und Wasser wodurch erreicht wird, daß festigkeitssteigernde Wirkungen auch an kompliziert zu fertigenden Bauwerken hervorgebracht werden, ein Nachlassen seines Einflusses nicht zugelassen wird und nachteilige Folgen für die Umwelt vollkommen ausgeschlossen sind.

Die Verwendung von Zusätzen in hydraulisch abbindenden Massen ist Stand der Technik und bereits seit mehreren Jahrzehnten üblich.
Sie dienen dazu, als Betonverflüssiger oder Fließmittel die Verminderung des Wasseranspruchs und/oder die Verbesserung der Verarbeitbarkeit zu gewährleisten bei Herstellung, beispielsweise von Beton mit fließfähiger Konsistenz.
Als bekannte Mittel der vorgenannten Art gelten seit langem Ligninsulfonate, Melaninsulfonate, Naphtalinsulfonate und Polymerverflüssiger. In jedem Einsatzfall ist jedoch unvermeidlich, daß in unerwünschter Weise Lufteinschlüsse (Luftporen) entstehen, die Dichtigkeit und Festigkeit von Bauwerken in Ortbetonweise hergestellt oder an Fertigteilen negativ beeinflussen.
Dies wurde erkannt und nach Möglichkeiten gesucht, eine Stoffbeimengung zur zielgerichteten Entlüftung zu finden.
Als eine geeignete Komponente erwies sich das Tributylphosphat (TBP) oder in Weiterentwicklung dessen, die TBP-haltigen Derivate.

Nach heutigen umwelt- und gesundheitspolitischen Aspekten wird TBP als toxikologisch nicht unproblematisch angesehen und ist daher bereits jetzt in den USA in der MAK-Liste 2000 als krebserregend in Kategorie 4 eingestuft.

In Deutschland ist TBP in der Gefahrstoffverordnung erfaßt, damit kennzeichnungspflichtig und kann bei oralen Kontakten gesundheitsschädigend wirken. Außerdem ist seine Wassergefährdung bekannt.

Allerdings ist TBP als Beimengung in den Betonzusatzmitteln (BZM) und Mörtelzusatzmitteln (MZM) mit weniger als 0,5 Masse % enthalten, so dass wiederum die daraus hergestellten Rezepturen nicht kennzeichnungspflichtig sind, aber zunehmend aus Gründen des Umweltschutzes in die Diskussion geraten (Auslaugen des Betons und Mörtels).

Technisch gesehen besitzen BZM in Verbindung mit der Beimengung TBP nachfolgend angeführte Nachteile:
1. Reduktion des Luftporengehaltes nicht wesentlich unter Nullstufe (gemessen an einer Referenzprobe ohne TBP).
2. TBP ist schwer in das Trägermedium z. B. Ligninsulfonat einarbeitbar. Es besteht die Gefahr der **Entmischung,** bei zu geringem Anteil des Trägermediums.
3. Es kann nur schwer ein homogenes Gemisch aus Trägermedium und TBP hergestellt werden.
4. Begrenzte Mischbarkeit/Wirksamkeit in Verbindung mit neuen Polymeren.
5. Ober die Zeit vermindert sich die Wirksamkeit des TBP.

Es wird beobachtet, daß TBP in keinem Zusatzmittel den Luftporengehalt signifikant unterhalb der Nullstufe reduziert. Weiterhin ist es nur mit großem technischen Aufwand überhaupt in die Zusatzmittel einzuarbeiten und das TBP homogen in dem Zusatzmittel zu verteilen. Bei Überdosierungen setzt es sich ab. Es wird immer wieder beobachtet, besonders bei der Verwendung der preiswerten und technisch guten Ligninsulfonate, daß TBP nach einer gewissen Weile als ölige Flüssigkeit auf der Oberfläche des Zusatzmittels schwimmt und sich somit entmischt hat. Hierdurch sind Ligninsulfonate als billiges Zusatzmittel auch unter der toxikologischen Relevanz des TBP's ökonomisch und ökologisch nachhaltig gefährdet. Dies ist gleich in zweierlei Hinsicht problematisch, erstens weil nicht genügend Entschäumer der technischen Anwendung zur Verfügung steht und zweitens ist nicht auszuschließen, daß gewisse Anteile des TBP's in die Gasphase treten können. Hierdurch wird u.a. eine Abnahme der Wirksamkeitskurve des TBP's festgestellt. Ein anderes Problem stellt das Leaching von Bauelementen im Grund- und Trinkwasserbereich dar.

Besonders deutlich werden die Nachteile des TBP's bei den modernen Polymeren. Diese Polymere haben extrem stark verflüssigende Effekte und werden deshalb als Self-Compacting-Concrete (SCC) eingesetzt. Diese Technologie verbessert nachhaltig die Verteilung einer hydraulisch abbindenden Masse bei technisch anspruchsvollen Projekten. Besonders, wenn schwierige Bauobjekte durchgeführt werden sollen, bei denen ein Rütteln zum Verdichten des Betons nicht möglich ist. Ein solcher Fall liegt auch in der Fertigteilindustrie vor. Würde es gelingen, ein Entlüftersystem zu erarbeiten, das in vollem Umfang mit Polymeren verträglich ist, wäre die Konsequenz daraus, daß die Festigkeiten und Dichtigkleiten weiter ansteigen. Der Anspruch und die Qualität an solche Betonelemente bzw. Baukonstruktionen ist extrem hoch.

Die hauptsächliche Anwendung des TBP's liegt in der Kunststofferzeugung; es wird hier als Weichmacher eingesetzt, deshalb greift es auch PVC an, welches wiederum einen weiteren begrenzenden Faktor in der Bauwirtschaft darstellen kann.

Zusammenfassend läßt sich feststellen, daß TBP in der Bauwirtschaft eine wesentliche Rolle spielt und den heutigen gewohnten Stand der Technologie erst ermöglicht. Erkauft werden jedoch diese Vorteile mit den geschilderten signifikanten Risiken und den dargestellten technologischen Grenzen.

"Entschäumer" auf einem anderen technischen Gebiet sind aus der Papierindustrie bekannt.

Gemäß der DE 30 39 393 A1 wird ein Antischaummittel vorgeschlagen mit einer erforderlichen Kombination eines aliphatischen Alkohols, einer festen Fettsäure, einer Seife und ggfs. einem Salz als oberflächenaktives Mittel.

Nach WO 95 / 35143 wird ebenfalls auf den hauptsächlichen Einsatzzweck in der Papierindustrie orientiert, wobei auch an allgemein bekannte Anwendungen in der Bauchemie gedacht ist. Es werden jedoch keine Lösungen angeboten, die zur Entlüftung von Betonzusatzmitteln / Mörtelzusatzmitteln beitragen, sondern lediglich darauf verwiesen, daß die Verarbeitungszeit dispersionsgebundener Putze verlängert würde. Im weiteren wird in der Schrift auf die Wirkung des verwendeten Tensides abgestellt.

Mit den beschriebenen Nachteilen behaftet, kann der Stand des bekannten Einsatzes von BZM in Kombination mit dem Entlüfter TBP und seinen Derivaten nicht befriedigen.

Der Erfindung liegt daher die Aufgabe zugrunde, einen Entlüfter für hydraulisch abbindende Massen vorzuschlagen.

Erfindungsgemäß wird die Aufgabe wie folgt gelöst, wobei hinsichtlich der grundlegenden erfinderischen Gedanken auf den Patentanspruch 1 verwiesen wird. Die weitere Ausgestaltung der Erfindung ergibt sich aus den Patentansprüchen 2 bis 3.

Zur erfindungsgemäßen Lösung sollen weitere Erläuterungen folgen.

Es wurde gefunden, daß die Kombination von Fettalkoholen unter Beimengung eines geringen Anteils von einem anionischen und/oder nichtionischen Tensid beim Einsatz in BZM/MZM den Prozeß der Entlüftung in erheblich günstigerem Maß, als es mit TBP der Fall ist, begünstigt.

Zur Herstellung des Gemisches des Entlüfters eignen sich insbesondere
- Stearylalkohol C 18
- Palmitylalkohol C 16
- Myristylalkohol C 14
- Laurylalkohol C 12

In Ergänzung mit jeweils dem Zusatz eines Tensides bzw. solchen, die als Emulgator oder Dispergiermittel wirken, können derartige Tensidsysteme Größenordnungen bis zu mehr als 5 Masse % eingesetzt werden. Die Rezeptur des jeweils anpaßbaren Entlüfters ermöglicht eine Reduktion des Luftporengehaltes - entsprechend der Dosiermenge - kleiner der Nullstufe (Referenzprobe ohne Zusatzmittel) d.h. es wird die Einstellung eines gewünschten Luftporengehaltes zielsicher möglich und es werden damit die Forderungen an ein hochwertiges Entlüftungssystem erfüllt .
Der Einsatz in Verbindung mit dem bekannten BZM/MZM Ligninsulfonat oder Naphthalinsulfonat ergibt eine Standardrezeptur des einstellbaren Entlüfters in folgender Weise:
- Stearylalkohol 60 Masse % - Anteile
- Palmitylalkohol 2,5 Masse % - Anteile
- Myristylalkohol 8,5 Masse % - Anteile
- Laurylalkohol 1,5 Masse % - Anteile
- Tensid 3,0 Masse % - Anteile
- Rest = Wasser

Eine solche Rezeptur ist im Verhältnis zur Gesamtmenge des eingesetzten BZM/MZM darin mit bis zu 0,25 Masse % enthalten.
Eine derartig allgemeingültige Einstellung und Zugabe des Entlüftungssystems kann auch auf der Basis der Verwendung vom Polymeren, beispielsweise von Oxiranen, erfolgen.
In Abwandlung dessen zeigte sich, daß das Verhältnis der Fettalkohole zueinander bei verschiedenen Oxirantypen und anderen geeigneten Polymeren von der Standardrezeptur abweichen kann und daher auf das verwendete BZM/MZM zugeschnitten wird.

Die Erfindung soll anhand von Ausführungsbeispielen näher erläutert werden.

Die Kombination verschiedener Fettalkohole und Tenside mit neueren BZM/MZM, insbesondere handelsüblicher Polymere, erbringt Resultate der Entlüftung, die unterhalb der Nullstufe eines vergleichbaren Einsatzes des bekannten TBP liegen. So können nachfolgende Rezepturen in zweckmäßiger Zusammenstellung für das Entlüftersystem vorgeschlagen werden:
a) Einsatz als Beimengung für handelsübliche Polymere
   - Stearylalkohol 59,6 Masse % Anteile
   - Palmitylalkohol 2,2 Masse % Anteile
   - Myristylalkohol 8,15 Masse % Anteile
   - Laurylalkohol 1,4 Masse % Anteile
   - Tensid 3,8 Masse % Anteile
   - Rest = Wasser
b) Beimengung für das Polycarboxylat Sokalan Hp 80
   - Stearylalkohol 45 Masse % Anteile
   - Palmitylalkohol 18 Masse % Anteile
   - Myristylalkohol 10 Masse % Anteile
   - Laurylalkohol 3,2 Masse % Anteile
   - Tensid 2,6 Masse % Anteile
   - Rest = Wasser

Das Betonzusatzmittel (BZM) Ligninsulfonat als übliches Betonverflüssigungs- und Fließmittel kann ebenfalls beispielhaft in Kombination mit den bereits definierten Fettalkoholen als Entlüfter in zweckmäßiger Rezeptur verbessert verwendet werden. Die nachfolgend genannten Kombinationen des Entlüfters beinhalten konstant 5 Masse % Tenside. Die erreichbare Reduktionswirkung als Angabe der Verringerung des Luftporengehaltes gegen die Nullstufe ist dabei in % angegeben.

Fettalkohole können für sich allein oder in Kombination, hier am Beispiel der vorbenannten Alkohole gewählt werden:
- C12/C14 ⇒ 18,5 Masse %
- C12/C16 ⇒ 13,5 Masse %
- C12/C18 ⇒ 19 Masse %
weiterhin
- C12/C14/C16 ⇒ 19,9 Masse %
- C12/C14/C18 ⇒ 21,3 Masse %
- C12/C16/C18 ⇒ 23 Masse %

Die angeführten Konzentrationen und Kombinationen von Fettalkoholen können, bei geringfügiger Rezepturänderung, grundsätzlich für alle technisch im Einsatz befindlichen und künftig in ähnlicher Form bekannten und nutzbaren BZM/MZM mit den beschriebenen positiven Effekten verwendet werden.

Die Entlüfter/Entlüfterkombinationen können auch zu Füllern und/oder Zuschlägen und/oder Pigmenten und/oder Anmach- und/oder Recyclingwasser zugeführt werden. Ferner können die beschriebenen Entlüftungssysteme als Verflüssiger / Fließmittel bzw. Plastifizierer / Superplastifizierer und/oder Wasserreduzierer und/oder Dichtungsmittel und/oder Verzögerer und/oder Einpreßhilfen und/oder Mahlhilfsmittel und/oder Stabilisierer und/oder als Zusatz zu Korrosionsinhibitoren und/oder Pumphilfen und / oder Schwindreduzierer dienen in Abhängigkeit von der Konzentration und Dosierung . Ebenso kann an einen Einsatz in den Bereichen Keramik, Lehm- und Tonbindern sowie an hydrat- und karbonhärtenden Bindern als auch Calciumsulfat-, Magnesia- und Phosphatbindern gedacht werden.
Es ist auch denkbar, daß Fettalkohole in Teilen von mindstens 1,4 bis 90 Masse % kombiniert werden, bei einer Beimengung von Tensiden mit bis zu über 5 Masse % der Menge des angesetzten Gemisches.
Weiterhin konnte festgestellt werden, daß die vorstehenden Rezepturen, wie sie in den Klassifizierungen des DIBT - "Richtlinien für die Erteilung von Zulassungen für Betonzusatzmittel" des Deutschen Institutes für Bautechnik sowie der EN 934 - European

Standard for Admixtures als auch in der EFCA "The European Federation of Concrete Admixtures Associations"- Schrift von Juni/ 1998 und in der ASTM" American Society for Testing and Materials" sowie in der AASHTO -" American Association of State Highway and Transportation Officials" und der in ACI -" American Concrete Institute" als auch im GOST "Government Standard of U.S.S.R." erfassten Zusatzmittel beschrieben sind, multifunktionell eingestzt werden können.

## Patentansprüche

1. Verwendung einer Zusammensetzung bestehend aus Fettalkohol, Tensid und Wasser als Entlüfter für hydraulisch abbindende Massen zur Beförderung der Wirksamkeit bekannter Beton- und Mörtelzusatzmittel [BZM / MZM].

2. Verwendung gemäß Anspruch 1, wobei die Zusammensetzung zu Füllern, Pigmenten, Anmachwasser, Recyclingwasser oder Zuschlägen zugeführt wird

3. Verwendung gemäß Anspruch 1, wobei die hydraulisch abbindenden Massen Gips-, Kalk-, Zement-, Beton- oder Mörtelmassen sind.

## Claims

1. A composition consisting of fatty alcohol, tenside and water used as a de-aerating agent for hydraulically binding compounds in order to promote the efficiency of commonly known concrete and mortar admixtures.

2. Use according to claim 1 **characterized in that** the composition is admixed to fillers, pigments, gauging water, recycling water or additives.

3. Use according to claim 1 **characterized in that** the hydraulically binding compounds are gypsum, limestone, cement, concrete and mortar materials.

## Revendications

1. Utilisation d'une composition constituée d'alcool gras, d'agent tensioactif et d'eau comme désaérant pour les masses à prise hydraulique afin d'améliorer l'efficacité d'adjuvants de béton et de mortier bien connus.

2. Utilisation selon la revendication 1, des matières de charge, pigments, eau de gâchage, eau de recyclage ou agrégats étant ajoutés à la composition.

3. Utilisation selon la revendication 1, les matières à prise hydraulique étant des matières au plâtre, à la chaux, au ciment, au béton ou au mortier.
